# EUROPEAN PATENT APPLICATION

(11) **EP 4 701 249 A1**
(43) Date of publication of application: **25.02.2026**
(21) Application number: 23933518.5
(22) Date of filing: 21.04.2023
(51) Int. Cl.: H04W 8/24

(54) **COMMUNICATION METHOD, ELECTRONIC DEVICE, AND STORAGE MEDIUM**

(71) Applicant: Beijing Xiaomi Mobile Software Co., Ltd., Beijing 100085 (CN)
(72) Inventor: CHENG, Yajun, Beijing 100085 (CN)
(74) Representative: Dehns Germany Partnerschaft mbB
(86) International application number: PCT/CN2023/089915
(87) International publication number: WO 2024/216642

(57) **Abstract**

Embodiments of the present disclosure relate to the technical field of mobile communications, and provide a communication method, an electronic device, and a storage medium. The communication method is applied to a first TDLS device. The method comprises: determining a first wireless frame, the first wireless frame comprising first identification information, the first identification information indicating whether the first TDLS device supports a target capability, and the target capability comprising low-latency data exchange of service data with a second TDLS device in a time slot of a first TXOP shared by an access point device AP; sending the first wireless frame. The embodiments of the present disclosure can provide a low-latency transmission means service data.

## Description

### TECHNICAL FIELD

The present disclosure relates to the field of mobile communication technologies. Specifically, the embodiments of the present disclosure relate to a communication method, an electronic device, and a storage medium.

### BACKGROUND

Peer-to-peer (P2P) communication eliminates the need for access points for data transmission, avoiding delays caused by network congestion and further improving transmission efficiency. To ensure the transmission of low-latency service data, a restricted target wake time (R-TWT) has been proposed. In order to further reduce the restrictions on the transmission capacity during the transmission of low-latency service data and reduce the transmission delay during the transmission of low-latency service data, the transmission process also needs to be optimized.

### SUMMARY

The embodiments of the present disclosure provide a communication method, an electronic device, and a storage medium to further reduce the transmission delay during the transmission of low-latency service data.

In one aspect, an embodiment of the present disclosure provides a communication method, applied to a first TDLS device, the method includes:
determining a first wireless frame, wherein the first wireless frame includes first identification information, wherein the first identification information indicates whether the first TDLS device supports a target capability; the target capability includes exchanging low-latency service data with a second TDLS device in a slot of a first TXOP shared by an access point (AP) device; and
sending the first wireless frame.

In another aspect, an embodiment of the present disclosure further provides a communication method, applied to an AP device, the method includes:
determining whether a TDLS device supports a target capability through first identification information of the TDLS device; the target capability includes exchanging low-latency service data in a slot of a TXOP shared by the AP device; wherein the TDLS device includes a first TDLS device and/or a second TDLS device.

In another aspect, an embodiment of the present disclosure further provides an electronic device, which is a first TDLS device, and includes:
a receiving module, configured to determine a first wireless frame, wherein the first wireless frame includes first identification information, wherein the first identification information indicates whether the first TDLS device supports a target capability; the target capability includes exchanging low-latency service data with a second TDLS device in a slot of a first TXOP shared by an access point (AP) device; and
a sending module, configured to send the first wireless frame.

In another aspect, an embodiment of the present disclosure further provides an electronic device, which is an access point (AP) device, and includes:
a determining module, configured to determine whether a TDLS device supports a target capability through first identification information of the TDLS device; the target capability includes exchanging low-latency service data in a slot of a TXOP shared by the AP device; wherein the TDLS device includes a first TDLS device and/or a second TDLS device.

An embodiment of the present disclosure further provides an electronic device, including a memory, a processor, and a computer program stored in the memory and executable on the processor. When the processor executes the program, one or more methods described in the embodiments of the present disclosure are implemented.

An embodiment of the present disclosure further provides a computer-readable storage medium having a computer program stored thereon. When the computer program is executed by a processor, one or more methods described in the embodiments of the present disclosure are implemented.

In the embodiment of the present disclosure, the first TDLS device identifies whether the first TDLS device supports the target capability through the first identification information in the first wireless frame, that is, the first TDLS device can exchange low-latency service data with the second TDLS device within the slot of the first TXOP shared by the AP and send the first wireless frame; for the first TDLS device that supports the target capability, it can exchange low-latency service data with the second TDLS device through the TDLS link within the slot of the first TXOP, thereby reducing the transmission delay during the low-latency service data transmission process, improving the low-latency service transmission efficiency, and avoiding the problem of increased transmission delay and low transmission efficiency during the data transmission process caused by only one-way data transmission between the first TDLS device and the second TDLS device. The embodiment of the present disclosure provides a method for transmitting low-latency service data.

Additional aspects and advantages of the embodiments of the present disclosure will be given in part in the following description, which will become apparent from the following description or be learned through practice of the present disclosure.

### BRIEF DESCRIPTION OF THE DRAWINGS

In order to more clearly illustrate the technical solutions of the embodiments of the present disclosure, the drawings required in describing the embodiments of the present disclosure will be introduced briefly below. Obviously, the drawings described below are only some embodiments of the present disclosure. For those skilled in the art, other drawings can be obtained based on these drawings without any creative work.
FIG. 1 is an interactive diagram of a communication method provided by an embodiment of the present disclosure;
FIG. 2 is another interactive schematic diagram of the communication method provided by an embodiment of the present disclosure;
FIG. 3 is a first flow chart of a communication method according to an embodiment of the present disclosure;
FIG. 4 is a second flowchart of the communication method provided by an embodiment of the present disclosure;
FIG. 5 is a first schematic diagram of a structure of an electronic device according to an embodiment of the present disclosure;
FIG. 6 is a second structural diagram of an electronic device provided in an embodiment of the present disclosure;
FIG. 7 is a third structural diagram of an electronic device provided in an embodiment of the present disclosure.

### DETAILED DESCRIPTION

Exemplary embodiments will be described in detail herein, examples of which are illustrated in the accompanying drawings. In the following description, unless otherwise indicated, like numbers in different figures represent like or similar elements. The embodiments described in the following exemplary embodiments are not intended to represent all possible embodiments consistent with the present invention. Rather, they are merely examples of apparatus and methods consistent with certain aspects of the present invention, as detailed in the appended claims.

In the embodiments of the present disclosure, the terms used are only for the purpose of describing specific embodiments and are not intended to limit the present disclosure. The singular forms "a", "said" and "the" used in the present disclosure and the appended claims are also intended to include plural forms, unless the context clearly indicates otherwise. It should also be understood that the term "and/or" used herein refers to and includes any or all possible combinations of one or more associated listed items. For example, A and/or B can mean: A exists alone, A and B exist at the same time, and B exists alone. The character "/" generally indicates that the objects associated before and after are in an "or" relationship. The term "multiple" refers to two or more. In view of this, "multiple" can also be understood as "at least two" in the embodiments of the present disclosure.

It should be understood that although the terms first, second, third, etc. may be used in this disclosure to describe various information, such information should not be limited to these terms. These terms are only used to distinguish information of the same type from each other. For example, without departing from the scope of this disclosure, first information may also be referred to as second information, and similarly, second information may also be referred to as first information. Depending on the context, for example, the word "if" as used herein may be interpreted as "at the time of" or "when" or "in response to determining".

The technical solutions in the embodiments of the present disclosure will be described clearly and completely below with reference to the accompanying drawings in the embodiments of the present disclosure. Obviously, the embodiments described are only part of the embodiments of the present disclosure and not all of the embodiments. Based on the embodiments of the present disclosure, all other embodiments obtained by those skilled in the art without making any creative efforts shall fall within the scope of protection of the present disclosure.

The embodiments of the present disclosure provide a communication method, an electronic device, and a storage medium for providing a low-latency service data transmission method.

In the present disclosure, the method and the device are based on the same application concept. Since the principles of solving problems by the method and the device are similar, the implementation of the device and the method can refer to each other, and the repeated parts will be omitted.

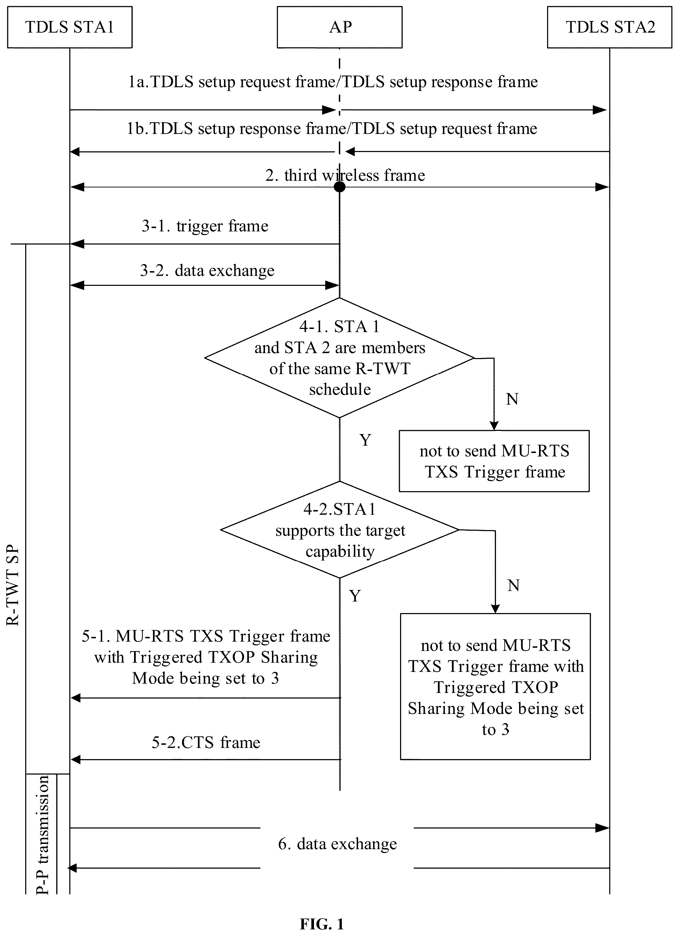

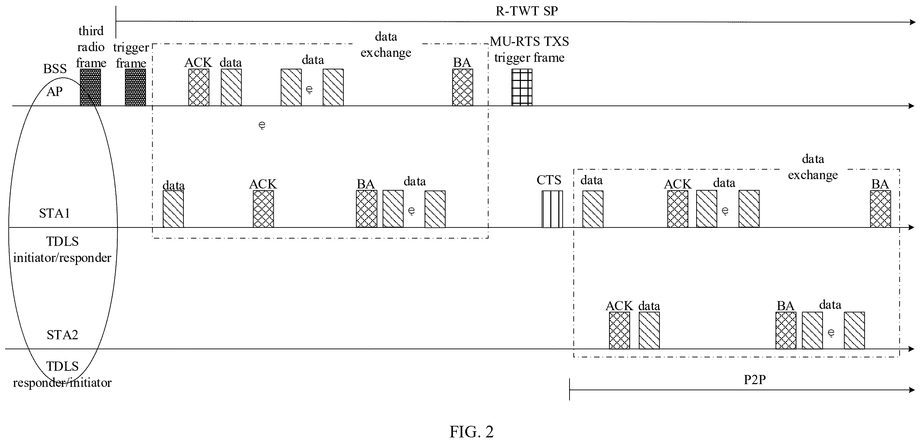

As a first example, referring to FIG. 1 and FIG. 2, examples of communication methods provided in various embodiments of the present disclosure are described. As shown in FIG. 2, an AP (Access Point), STA 1 (the first TDLS (Tunneled Direct Link Setup) device, or STA), and STA 2 (the second TDLS device, or STA) are in the same Basic Service Set (BSS). The STA 1 and STA 2 are peer devices, and all operations performed by STA 1 in this embodiment can also be performed by STA 2. In the embodiments of the present disclosure, the STA 1 and STA 2 can be collectively referred to as the STA, and the STA can also be non-AP MLD devices.

Step 1: When the STA 1 and STA 2 negotiate to establish a TDLS link, information indicating the transmission capabilities of the STA is carried by a first wireless frame.

The first wireless frame includes a TDLS setup request frame and/or a TDLS setup response frame. The first TDLS device (STA 1 or STA 2) sends a TDLS setup request frame to its associated AP. After receiving the TDLS setup request frame, the AP forwards the TDLS setup request frame to the other TDLS device (STA 2 or STA 1). After receiving the TDLS setup request frame forwarded by the AP, the other TDLS device forwards a TDLS setup response frame to the first TDLS device via the AP.

Referring to FIG. 1, step 1 may include step la and step 1b. Step la includes: the STA 1 sends a TDLS setup request frame/TDLS setup response frame to the AP; after receiving the TDLS setup request frame/TDLS setup response frame, the AP forwards the TDLS setup request frame/TDLS setup response frame to the STA 2. Step 1b includes: the STA 2 sends a TDLS setup response frame/TDLS setup request frame to the AP; after receiving the TDLS setup response frame/TDLS setup request frame, the AP forwards the TDLS setup response frame/TDLS setup request frame to the STA 2. The specific first wireless frame in steps 1a and 1b may be determined based on the TDLS initiator and the TDLS responder.

When the STA 1 is the TDLS initiator, the step 1a is executed first, and then the step 1b. Specifically, in step 1a, the STA 1 sends a TDLS setup request frame to the AP. After receiving the TDLS setup request frame, the AP forwards the TDLS setup request frame to the STA 2. In step 1b, after receiving the TDLS setup request frame forwarded by the AP, the STA 2 forwards a TDLS setup response frame to the STA 1 through the AP.

When STA 1 acts as the TDLS responder, the step 1b is executed first, and then the step 1a. Specifically, in step 1b, the STA 2 sends a TDLS setup request frame to the AP. After receiving the TDLS setup request frame, the AP forwards the TDLS setup request frame to the STA 1. In step 1a, after the STA 1 receives the TDLS setup request frame forwarded by the AP, the STA 1 forwards the TDLS setup response frame to the STA 2 through the AP.

The transmission capability may include a target capability and a first capability. The target capability is the capability that the STA can exchange data with its associated AP or STA within the received AP-shared slot of the transmission opportunity (TXOP). That is, it can both send and receive data. The first capability is the capability that the STA can send data to its associated AP or STA within the received AP-shared TXOP slot.

Hereinafter, the communication method provided by the embodiment of the present disclosure is described below by taking the STA1 as the TDLS initiator, sending a TDLS setup request frame; and the STA2 as the TDLS responder, sending a TDLS setup response frame as an example.

Step 2: the AP broadcasts an R-TWT (Restricted Target Wake Time) schedule through a third wireless frame. The R-TWT supports the device to perform low-latency service data transmission over a TDLS link during the corresponding R-TWT SP (Service Period). The STA1 and STA2 can join the R-TWT schedule through the TWT Setup frame and become the members of the R-TWT.

The third wireless frame may be a Beacon frame or a Probe response frame, wherein the Probe response frame may be an unsolicited Probe response frame.

It should be noted that in the embodiments of the present disclosure, there is no fixed order for executing steps 1 and 2. That is, step 1 can be executed first, followed by step 2; step 2 can be executed first, followed by step 1; or steps 1 and 2 can be executed simultaneously. The order of executing steps 1 and 2 can be selected based on actual needs.

Step 3-1: Within the SP of the R-TWT schedule, the AP sends a trigger frame (e.g., a Basic Trigger frame) to the STA 1 to wake up the STA 1 to exchange data with the AP.

Step 3-2: The AP exchanges data with the STA 1. The data exchange may be performed in the form of data frames. Specifically, the exchanged data may be independent data frames or multiple consecutive data frames (i.e., data blocks).

During the data exchange process, when the receiver (i.e., the AP or the STA 1) receives an independent data frame, it can feedback an acknowledgment frame (ACK frame for short) to the initiator (i.e., the STA 1 or the AP); when the receiver receives multiple consecutive data frames, it can feedback a block acknowledgment frame (block ACK, abbreviated to BK, also known as block ACK frame) to the initiator.

For example, referring to FIG. 2, the STA 1 sends a data frame to the AP. After receiving the data frame, the AP sends an ACK frame to the STA 1. The AP sends a first set of multiple consecutive data frames to the STA 1. After receiving the first set of data frames, the STA 2 sends a first block acknowledgment frame to the AP. The STA 1 sends a second set of multiple consecutive data frames to the AP. After receiving the second set of data frames, the AP sends a second block acknowledgment frame to the STA 1.

Step 4-1: The AP determines whether the STA 1 and the STA2 are members of the same R-TWT schedule.

Step 4-2: Based on the first wireless frame sent by the STA 1, the AP determines whether the STA 1 supports or has the target capability, that is, whether the STA 1 has the ability to exchange data with its associated AP or STA within the received AP-shared TXOP slot. If the Triggered TXOP Sharing Mode 3 Support subfield is set to 1 (i.e., the first parameter value), this indicates that the STA 1 supports the target capability. If the Triggered TXOP Sharing Mode 3 Support subfield is set to 0 (i.e., the third parameter value), this indicates that the STA 1 does not support the target capability.

Optionally, the AP may determine whether the STA 1 has the target capability based on the Triggered TXOP Sharing Mode 3 Support subfield in the TDLS Setup Request frame or the TDLS Setup Response frame sent by the STA 1.

The AP may obtain the Sharing Mode 3 Support subfield corresponding to the STA 1 by directly exchanging data with the STA 1; or the AP may obtain the Triggered TXOP Sharing Mode 3 Support subfield corresponding to the STA 1 by performing relay with other STAs or other APs associated with the STA 1.

It should be noted that in the embodiments of the present disclosure, there is no fixed order for executing Step 4-1 and Step 4-2. That is, Step 4-1 may be executed first, followed by Step 4-2; Step 4-2 may be executed first, followed by Step 4-1; or Step 4-1 and Step 4-2 may be executed simultaneously. The order of executing Step 4-1 and Step 4-2 can be selected based on actual needs.

In one embodiment, when the AP determines that the STA 2 is not a member of the R-TWT schedule, the AP does not send the MU-RTS TXS Trigger frame to the STA 1.

In one embodiment, if the AP determines that the STA 1 does not support the target capability, the AP does not send the MU-RTS TXS Trigger frame with the Triggered TXOP Sharing Mode subfield set to 3 to the STA 1.

Step 5-1: When the AP determines that the STA 1 and the STA2 are both members of the same R-TWT schedule and the STA 1 supports the target capability, it sends a MU-RTS TXS Trigger frame (multi-user request-to-send trigger-based transmission status trigger frame, i.e., the second wireless frame) with the Triggered TXOP Sharing Mode subfield set to 3 to the STA 1, and allocates the slot of the first TXOP to the STA 1 so that the STA 1 can exchange data with the STA 2 within the slot of the first TXOP.

Step 5-2: After receiving the MU-RTS TXS Trigger frame, the STA 1 sends a CTS frame (Clear To Send frame) to the AP, responding to the MU-RTS TXS Trigger frame sent by the AP.

Step 6: The STA 1 and the STA 2 perform peer-to-peer (P2P) transmission, that is, the STA 1 and the STA 2 exchange data to achieve bidirectional data transmission between the STA 1 and the STA 2.

During the data exchange process, after the receiver (i.e., the STA 2 or the STA 1) receives the data frame sent by the sender (i.e., the STA 1 or the STA 2), it can feedback an acknowledgment frame ACK frame to the sender; when the receiver receives multiple consecutive data frames sent by the sender, it can feedback a BA frame to the sender.

Specifically, referring to FIG. 2, the P2P transmission process may be: the STA 1 sends a first data frame to the STA 2; after the STA 2 receives the first data frame, it feeds back a first ACK frame to the STA 1; the STA 2 sends a second data frame to the STA 1; after the STA 1 receives the second data frame, it feeds back a second ACK frame to the STA 2; the STA 1 sends a first group of multiple consecutive data frames to the STA 2; after the STA 2 receives the first group of data frames, it feeds back a first BA frame to the STA 1; the STA 2 sends a second group of multiple consecutive data frames to the STA 1; after the STA 1 receives the second group of data frames, it feeds back a second BA frame to the STA 2.

If the AP determines that the STA 1 does not support the target capability, it can further determine whether the second TDLS device supports the target capability, whether the second TDLS device supports the first capability, and whether the second TDLS device has received the second TXOP slot allocated by the AP. If the second TDLS device supports the target capability or supports the first capability, and the second TDLS device has received the second TXOP slot allocated by the AP, the first TDLS device can receive data sent to it by the second TDLS device via the TDLS link in the second TXOP slot.

It should be noted that, as described above, the STA1 and the STA2 are peer devices. The above embodiment is described by taking the STA1 sending data to the STA2 as an example. The method is also applicable to the STA2. Specifically, taking the main execution steps as an example: in step 3-1, within the SP of the R-TWT schedule, the AP sends a trigger frame to the STA 2 device to wake up the STA 2 to exchange data with the AP; in step 3-2, the AP exchanges data with the STA 2; in step 4-2, the AP determines whether the STA 2 has the target capability based on the first wireless frame sent by the STA 2; in step 5-1, when the AP determines that the STA 1 and the STA 2 are both members of the same R-TWT schedule and the STA 2 supports the target capability, it sends a MU-RTS TXS Trigger frame with the triggered TXOP sharing mode subfield set to 3 to the STA 2, and allocates the first TXOP slot to the STA 2; in step 5-2: after receiving the MU-RTS TXS Trigger frame, the STA 2 sends a CTS frame to the AP, that is, responds to the MU-RTS TXS Trigger frame sent by the AP; in step 6, the STA 2 and the STA 1 perform peer-to-peer transmission.

In this way, the TDLS establishment request frame or TDLS establishment response frame sent by the STA indicates whether the STA has the ability to exchange data with the AP or STA associated with it within the received TXOP slot shared by the AP; for the STA with this data exchange capability, it can exchange low-latency service data with the STA associated with it through the successfully established TDLS link within the slot of the TXOP allocated by the AP, thereby reducing the transmission delay in the process of low-latency service data transmission, improving the low-latency service transmission efficiency, and avoiding the problem of increased transmission delay and low transmission efficiency in the data transmission process caused by only one-way data transmission between the first TDLS device and the second TDLS device.

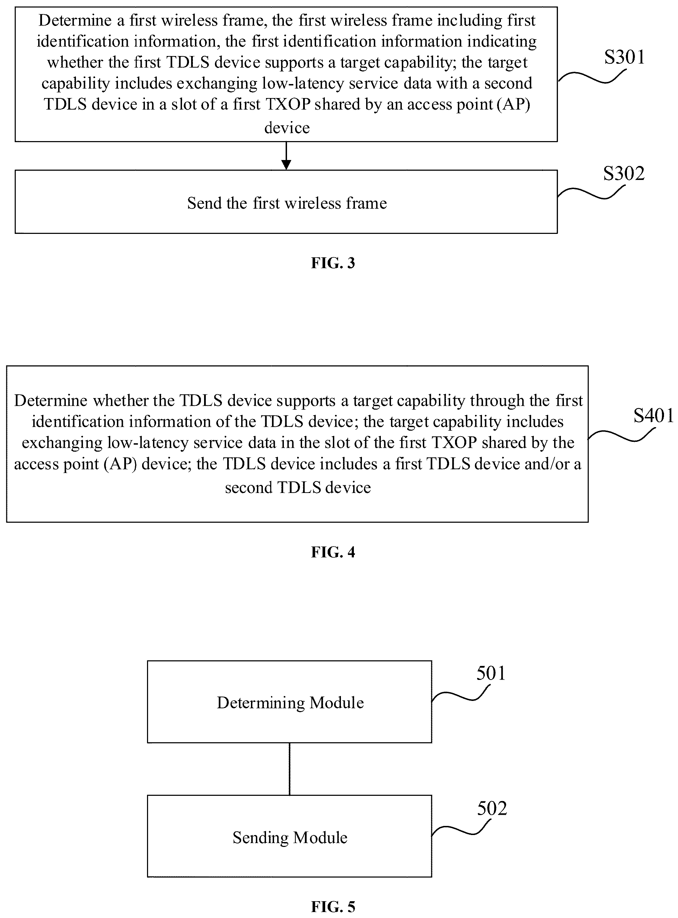

Referring to FIG. 3, an embodiment of the present disclosure provides a communication method. Optionally, the method may be applied to a first TDLS device. The method may include the following steps:
Step S301: Determine a first wireless frame, the first wireless frame including first identification information, the first identification information indicating whether the first TDLS device supports a target capability; the target capability includes exchanging low-latency service data with a second TDLS device in a slot of a first TXOP shared by an access point (AP) device;
Step S302: Send the first wireless frame.

The first wireless frame may include, but is not limited to, a TDLS setup request frame, a TDLS setup response frame, or other data frames specifically used to indicate whether the first TDLS device supports the target capability. When the first wireless frame is a TDLS setup request frame or a TDLS setup response frame, the first wireless frame may be sent to another TDLS device to establish a TDLS link between the first TDLS device and the other TDLS device.

Taking the example of establishing a TDLS link between a first TDLS device and a second TDLS device, the first and second TDLS devices can be two STAs, for example. TDLS technology enables two STAs in the same basic service set to transmit data without AP participation after establishing a TDLS connection. This allows them to transmit data directly using the fastest rate supported by both STAs, without being constrained by the AP. Direct transmission can occur on the original channel or on a new extended channel, thus avoiding data transmission delays caused by network congestion and being of great significance for the transmission of low-latency services.

Specifically, during the process of establishing a TDLS link, when one of the first TDLS device or the second TDLS device is the TDLS initiator and the other is the TDLS responder, the two devices can establish a TDLS link between them using a TDLS setup request frame and a TDLS setup response frame. The TDLS initiator can send a TDLS setup request frame, and the TDLS responder can send a TDLS setup response frame.

During the process of establishing a TDLS link, a designated field in the first wireless frame can be determined as the first identification information, indicating whether the first TDLS device supports the target capability, that is, the first TDLS device can exchange low-latency service data with the second TDLS device within the slot of the first TXOP shared by the AP.

In the embodiment of the present disclosure, the first TDLS device identifies whether the first TDLS device supports the target capability through the first identification information in the first wireless frame, that is, the first TDLS device can exchange low-latency service data with the second TDLS device within the slot of the first TXOP shared by the AP, and send the first wireless frame; for the first TDLS device that supports the target capability, after obtaining the slot of the first TXOP, it can exchange low-latency service data with the second TDLS device through the TDLS link within the slot of the first TXOP, thereby reducing the transmission delay in the process of low-latency service data transmission, improving the low-latency service transmission efficiency, and avoiding the problem of increased transmission delay and low transmission efficiency in the data transmission process caused by only one-way data transmission between the first TDLS device and the second TDLS device.

In the communication method applied to the first TDLS device provided by the embodiment of the present disclosure, the first wireless frame includes a TDLS setup request frame or a TDLS setup response frame.

In the communication method applied to the first TDLS device provided in the embodiment of the present disclosure, the first identification information is carried in the EHT capabilities information of the EHT capabilities element of the first wireless frame.

The Triggered TXOP Sharing Mode 3 Support subfield of the EHT capabilities information being set to the first parameter value, indicates that the first TDLS device supports the target capability.

The TDLS setup request frame or the TDLS setup response frame may include an EHT capabilities element, and the EHT capabilities element may include an EHT MAC Capabilities Information field. The EHT MAC capabilities information field may include multiple subfields. Reference can be made to Table 1 to determine the respective subfields of the EHT MAC capabilities information field.

**Table 1**

| | | | | | | |
|---|---|---|---|---|---|---|
| ... | EHT OM Control Support | Triggered TXOP Sharing Mode 1 Support | Triggered TXOP Sharing Mode 2 Support | ... | Triggered TXOP Sharing Mode 3 Support | ... |

As shown in Table 1, the EHT MAC capabilities information field may include an EHT OM Control Support subfield, a Triggered TXOP Sharing Mode 1 Support subfield, a Triggered TXOP Sharing Mode 2 Support subfield, and a Triggered TXOP Sharing Mode 3 Support subfield.

The parameter value (i.e., first identification information) of the Trigger TXOP Sharing Mode 3 Support subfield may be used to indicate whether the corresponding TDLS device (i.e., the TDLS device corresponding to the first wireless frame, e.g., the first TDLS device) supports the target capability. The parameter value of the Trigger TXOP Sharing Mode 2 Support subfield may be used to indicate whether the corresponding TDLS device supports the first capability.

Specifically, when the parameter value of the Triggered TXOP Sharing Mode 3 Support subfield is set to 1 (i.e., the first parameter value), it can indicate that the corresponding TDLS device supports the target capability. When the parameter value of the Triggered TXOP Sharing Mode 3 Support subfield is set to 0, it can indicate that the corresponding first TDLS device does not support the target capability.

When the parameter value of the Triggered TXOP Sharing Mode 2 Support subfield is set to 1, it may indicate that the corresponding TDLS device supports the first capability. When the parameter value of the Triggered TXOP Sharing Mode 2 Support subfield is set to 0, it may indicate that the corresponding TDLS device does not support the first capability.

In a communication method applied to a first TDLS device provided in an embodiment of the present disclosure, when the first identification information indicates that the first TDLS device supports the target capability, a second wireless frame is received, the second wireless frame includes second identification information, and the second identification information identifies that the AP allocates a slot of the first TXOP to the first TDLS device within the SP of the R-TWT schedule.

The slot of the first TXOP is used for the first TDLS device to exchange data with the second TDLS device via the TDLS link; and the first TDLS device and the second TDLS device are both members of the first R-TWT schedule.

In the communication method applied to the first TDLS device provided by the embodiment of the present disclosure, the second wireless frame includes a MU-RTS TXS Trigger frame.

TWT is an energy-saving technology designed to further reduce Wi-Fi network power consumption. Specifically, TWT enables the STAs and the APs to negotiate service time, determining the STA's sleep and wake-up times and frequencies. The STAs remain active and communicate during these service time, allowing them to sleep outside of service time, thereby achieving energy savings. TWT also enables the AP to provide higher-quality service to multiple STAs, minimizing contention or overlap, thereby reducing Wi-Fi network power consumption while improving spectrum efficiency.

In low-latency transmission scenarios, the real-time data traffic of many applications has strict delay requirements, for example, the average delay or maximum delay is on the order of a few milliseconds to tens of milliseconds, and the applications require real-time data traffic to have extremely small jitter and strong reliability. In order to further ensure the communication of low-latency services, based on the technology of TWT, a target wake-up time limit is proposed. The R-TWT mechanism allows the AP to use enhanced media access protection mechanisms and resource reservation mechanisms to provide more predictable delays to distinguish delay-sensitive traffic from other types of traffic, allowing the AP to reduce the worst-case delay and/or reduce jitter, providing more reliable services.

In the embodiment of the present disclosure, the R-TWT planning device (such as AP, or called Scheduling AP) and the planned device (such as STA, or called Scheduled STA) can pre-establish an R-TWT schedule. The AP broadcasts the R-TWT schedule, the STA negotiates with the AP and becomes a member of the R-TWT schedule. The AP and the STA only transmit the uplink and downlink corresponding low-latency services identified by the R-TWT schedule within the corresponding R-TWT service period (SP). Other communication services are suspended or postponed during this period. Specifically, the R-TWT is used to serve low-latency services, such as services with an average delay of less than 10 milliseconds. Within the R-TWT SP, only services identified as low-latency services communicate, and other communication services are suspended or postponed during this period, thereby ensuring the transmission of low-latency services.

In the embodiment, the second identification information can be carried in a designated field in the MU-RTS TXS Trigger frame sent by the AP. When the designated field is a set parameter value, it identifies that the AP allocates the slot of the first TXOP to the first TDLS device within the SP of the R-TWT schedule; after the first TDLS device receives the MU-RTS TXS Trigger frame, it can exchange data with the second TDLS device through the TDLS link successfully established with the second TDLS device within the slot of the first TXOP allocated in the MU-RTS TXS Trigger frame.

In the communication method applied to the first TDLS device provided in the embodiment of the present disclosure, the second identification information includes a triggered TXOP sharing mode subfield.

The Triggered TXOP Sharing Mode subfield being set to the second parameter value, indicates that the AP allocates the slot of the first TXOP to the first TDLS device within the SP of the R-TWT schedule.

In the embodiment of the present disclosure, the MU-RTS TXS Trigger frame includes a Common Info field, which includes a Triggered TXOP Sharing Mode subfield. The second identification information may be carried in the Triggered TXOP Sharing Mode subfield.

For the triggered TXOP sharing mode subfield, when its corresponding parameter value is set to different values, the information it indicates is different, and the specific parameter value can be set according to the actual situation. For details, please refer to Table 2:

**Table 2**

| Triggered TXOP Sharing Mode subfield value | Specification |
|---|---|
| ... | ... |
| 3 | MU-RTS frame enables the MU-RTS TXOP sharing process, in which the corresponding STA can exchange data with its associated AP or other STAs |
| ... | ... |

As shown in Table 2, when the Triggered TXOP Sharing Mode subfield is set to 3 (i.e., the second parameter value), it instructs that the AP allocates the slot of the first TXOP to the first TDLS device; for the first TDLS device that receives the MU-RTS TXS Trigger frame, low-latency service data can be exchanged with the second TDLS device through the TDLS link within the slot of the first TXOP.

In the communication method applied to the first TDLS device provided in the embodiment of the present disclosure, data is exchanged with the second TDLS device via the TDLS link within the slot of the first TXOP.

After the first TDLS device receives the MU-RTS TXS Trigger frame with the TXOP sharing mode subfield set to 3, it can exchange data with the second TDLS device through the TDLS link within the slot of the first TXOP.

For details, please refer to FIG. 2 and the related description above. The STA 1 (i.e., the first TDLS device) and the STA 2 (i.e., the second TDLS device) can perform P2P transmission via the TDLS link between them in the slot of the first TXOP.

In the communication method applied to the first TDLS device provided in the embodiment of the present disclosure, when the first identification information indicates that the first TDLS device does not support the target capability, low-latency service data sent by the second TDLS device is received through the TDLS link in a slot of a second TXOP.

The slot of the second TXOP is used by the second TDLS device to send low-latency service data to the first TDLS device.

The first identification information indicates that the first TDLS device does not support the target capability, that is, the parameter value of the Triggered TXOP Sharing Mode 3 Support subfield in the first wireless frame is 0.

After the first TDLS device successfully establishes a TDLS link with the second TDLS device, if the first TDLS device does not support the target capability (i.e., the parameter value of the corresponding Triggered TXOP Sharing Mode 3 Support subfield is set to 0), it can be further determined whether the second TDLS device supports the target capability, whether the second TDLS device supports the first capability, and whether the second TDLS device receives the second TXOP slot allocated by the AP, thereby determining whether the first TDLS device can receive data sent to it by the second TDLS device through the TDLS link.

The second TDLS device supports the target capability (i.e., the corresponding Triggered TXOP Sharing Mode 3 Support subfield parameter value is set to 1), which means that the second TDLS device can exchange data with the first TDLS device during the slot of the second TXOP allocated by the AP. The second TDLS device supports the first capability (i.e., the corresponding Triggered TXOP Sharing Mode 2 Support subfield parameter value is set to 1), which means that the second TDLS device can send data to the first TDLS device during the slots of the second TXOP allocated by the AP.

If it is further determined that the second TDLS device supports the target capability (i.e., the corresponding Triggered TXOP Sharing Mode 3 Support subfield parameter value is set to 1) or the second TDLS device supports the first capability (i.e., the parameter value of the corresponding Triggered TXOP Sharing Mode 2 Support subfield is set to 1), and the second TDLS device receives the second TXOP slot assigned by the AP, i.e., the second TDLS device can exchange data with the first TDLS device within the slot of the second TXOP assigned by the AP, or the second TDLS device can send data to the first TDLS device within the slot of the second TXOP allocated by the AP, then the first TDLS device can still receive data (e.g., low-latency service data) sent to it by the second TDLS device through the TDLS link.

In the embodiment of the present disclosure, the first TDLS device identifies whether the first TDLS device supports the target capability through the first identification information in the first wireless frame, that is, the first TDLS device can exchange low-latency service data with the second TDLS device within the slot of the first TXOP shared by the AP, and send the first wireless frame; for the first TDLS device that supports the target capability, it can exchange low-latency service data with the second TDLS device through the TDLS link within the slot of the first TXOP, further improving the transmission capability of the first TDLS device, reducing the transmission delay during the low-latency service data transmission process, improving the low-latency service transmission efficiency, and avoiding the problem of increased transmission delay and low transmission efficiency during the data transmission process caused by only one-way data transmission between the first TDLS device and the second TDLS device.

An embodiment of the present disclosure provides a communication method, which is applied to a first TDLS device. The method may include the following steps:
determining a first wireless frame, the first wireless frame including first identification information, the first identification information indicating whether the first TDLS device supports a target capability; the target capability including exchanging low-latency service data with the second TDLS device in a slot of a first TXOP shared by an access point device AP;
sending the first wireless frame.

Optionally, the first identification information is carried in EHT capabilities information of an EHT capabilities element of the first wireless frame.

A Triggered TXOP Sharing Mode 3 Support subfield of the EHT capabilities information being set to the first parameter value, indicates that the first TDLS device supports the target capability.

Optionally, when the first identification information indicates that the first TDLS device supports the target capability, a second wireless frame is received, the second wireless frame includes second identification information, and the second identification information identifies that the AP allocates the slot of the first TXOP to the first TDLS device within the SP of the R-TWT schedule; wherein the slot of the first TXOP is used for the first TDLS device to exchange data with the second TDLS device through the TDLS link; the first TDLS device and the second TDLS device are both members of the first R-TWT schedule.

Optionally, the second identification information includes a triggered TXOP sharing mode subfield.

The Triggered TXOP Sharing Mode subfield being set to the second parameter value, indicates that the AP allocates the slot of the first TXOP to the first TDLS device within the SP of the R-TWT schedule.

Optionally, data is exchanged with the second TDLS device via the TDLS link within the slot of the first TXOP.

Optionally, when the first identification information indicates that the first TDLS device does not support the target capability, low-latency service data sent by the second TDLS device is received through the TDLS link within a slot of a second TXOP; the slot of the second TXOP is used for the second TDLS device to send low-latency service data to the first TDLS device.

Optionally, the first wireless frame includes a TDLS setup request frame or a TDLS setup response frame.

Optionally, the second wireless frame includes a MU-RTS TXS Trigger frame.

In the embodiment of the present disclosure, the first TDLS device identifies whether the first TDLS device supports the target capability through the first identification information in the first wireless frame, that is, the first TDLS device can exchange low-latency service data with the second TDLS device within the slot of the first TXOP shared by the AP, and send the first wireless frame; for the first TDLS device that supports the target capability, it can exchange low-latency service data with the second TDLS device through the TDLS link within the slot of the first TXOP, thereby reducing the transmission delay in the process of low-latency service data transmission, improving the low-latency service transmission efficiency, and avoiding the problem of increased transmission delay and low transmission efficiency in the data transmission process caused by only one-way data transmission between the first TDLS device and the second TDLS device.

Referring to FIG. 4, an embodiment of the present disclosure provides a communication method, which is optionally applied to an AP device. Optionally, in the embodiment of the present disclosure, the AP is, for example, a device with a wireless to wired bridging function, and the AP is responsible for extending the services provided by the wired network to the wireless network; for example, an electronic device with a wireless network access function provides a frame delivery service to enable information to be transmitted. Optionally, in the embodiment of the present disclosure, the AP and the STA may be devices that support multiple connections, for example, they may be represented as AP MLD and non-AP MLD, respectively; the AP MLD may represent an access point that supports the multiple connection communication function, and the non-AP MLD may represent a station that supports the multiple connection communication function. The method may include the following steps:
Step S401: Determine whether the TDLS device supports a target capability through the first identification information of the TDLS device; the target capability includes exchanging low-latency service data in the slot of the first TXOP shared by the access point (AP) device; the TDLS device includes a first TDLS device and/or a second TDLS device.

The AP can determine whether the TDLS device supports the target capability by receiving a first wireless frame related to whether the TDLS device supports the target capability. The target capability can be whether the TDLS device can exchange low-latency service data with the associated AP or TDLS device within the slot of the first TXOP shared by the AP.

The first wireless frame may be directly sent by the TDLS device to the AP, or may be relayed to the AP through another AP associated with the TDLS device.

The first wireless frame may be a TDLS setup request frame or a TDLS setup response frame, specifically a TDLS setup request frame initiated by the TDLS device or a TDLS setup response frame received by the TDLS device during the process of establishing a TDLS link between the first TDLS device and the second TDLS device.

It can be understood that, taking the first wireless frame as the wireless frame corresponding to the first TDLS device as an example, when the first TDLS device is the initiator of establishing the TDLS link, a field indicating whether the first TDLS device supports the target capability can be carried in the TDLS establishment request frame. When the first TDLS device is the responder end of establishing the TDLS link, a field indicating whether the first TDLS device supports the target capability can be carried in the TDLS establishment response frame. By carrying the field indicating whether the first TDLS device supports the target capability, it is determined whether the first TDLS device supports the target capability, that is, whether the first TDLS device can exchange low-latency service data with the second TDLS device within the slot of the first TXOP shared by the access point (AP) device.

In the embodiment of the present disclosure, the AP can determine whether the TDLS device supports the target capability through the first identification information of the TDLS device, that is, the TDLS device can exchange low-latency service data within the slot of the first TXOP shared by the AP; for the first TDLS device that supports the target capability and obtains the slot of the first TXOP shared by the AP, it can exchange low-latency service data with the second TDLS device through the TDLS link within the slot of the first TXOP, further improving the transmission capability of the first TDLS device, reducing the transmission delay during the low-latency service data transmission process, improving the low-latency service transmission efficiency, and avoiding the problem of increased transmission delay and low transmission efficiency during the data transmission process caused by only one-way data transmission between the first TDLS device and the second TDLS device.

In the communication method provided by the embodiment of the present disclosure, the first wireless frame includes a TDLS setup request frame or a TDLS setup response frame.

In the communication method provided in the embodiment of the present disclosure, the first identification information is carried in the EHT capabilities information of the EHT capabilities element of the first wireless frame.

The Triggered TXOP Sharing Mode 3 Support subfield of the EHT capabilities information being set to the first parameter child, indicates that the TDLS device supports the target capability.

The Triggered TXOP Sharing Mode 3 Support subfield of the EHT capabilities information being set to the first parameter value, indicates that the first TDLS device supports the target capability.

The TDLS setup request frame or the TDLS setup response frame may include an EHT capabilities element, and the EHT capabilities element may include an EHT MAC capabilities information field. The MAC capabilities information field may include multiple subfields.

The various subfields in the EHT MAC capabilities information field may be determined with reference to Table 1 shown above. That is, the MAC capabilities information field may include an EHT OM Control Support subfield, a Triggered TXOP Sharing Mode 1 Support subfield, a Triggered TXOP Sharing Mode 2 Support subfield, and a Triggered TXOP Sharing Mode 3 Support subfield.

The parameter value (i.e., first identification information) of the Trigger TXOP Sharing Mode 3 Support subfield may be used to indicate whether the corresponding TDLS device (i.e., the TDLS device corresponding to the first wireless frame, e.g., the first TDLS device) supports the target capability. The parameter value of the Trigger TXOP Sharing Mode 2 Support subfield may be used to indicate whether the corresponding TDLS device supports the first capability.

Specifically, when the parameter value of the Triggered TXOP Sharing Mode 3 Support subfield is set to 1 (i.e., the first parameter value), it can indicate that the corresponding TDLS device supports the target capability. When the parameter value of the Triggered TXOP Sharing Mode 3 Support subfield is set to 0, it can indicate that the corresponding first TDLS device does not support the target capability.

When the parameter value of the Triggered TXOP Sharing Mode 2 Support subfield is set to 1, it may indicate that the corresponding TDLS device supports the first capability. When the parameter value of the Triggered TXOP Sharing Mode 2 Support subfield is set to 0, it may indicate that the corresponding TDLS device does not support the first capability.

In the communication method provided in the embodiment of the present disclosure, when the first identification information indicates that the first TDLS device supports the target capability, a second wireless frame is determined, the second wireless frame includes second identification information, and the second identification information identifies that the AP allocates a slot of the first TXOP to the first TDLS device; wherein the slot of the first TXOP is used for the first TDLS device to exchange data with the second TDLS device via the TDLS link; the first TDLS device and the second TDLS device are both members of the first R-TWT schedule.

Within the SP of the R-TWT schedule, the second wireless frame is sent to the first TDLS device.

In the communication method provided by the embodiment of the present disclosure, the second wireless frame includes a MU-RTS TXS Trigger frame.

The AP determines whether the first TDLS device and the second TDLS device are both members of the first R-TWT schedule by broadcasting the first R-TWT schedule to the first TDLS device and the second TDLS device, and based on the negotiation results with the first TDLS device and the second TDLS device respectively.

In the embodiment, the second identification information can be carried in a designated field in the MU-RTS TXS Trigger frame sent by the AP. When the designated field is a set parameter value, it identifies that the AP allocates the slot of the first TXOP to the first TDLS device within the SP of the R-TWT schedule; for the first TDLS device that receives the MU-RTS TXS Trigger frame, data can be exchanged with the second TDLS device through the TDLS link successfully established with the second TDLS device within the slot of the first TXOP allocated in the MU-RTS TXS Trigger frame.

In the communication method provided by the embodiment of the present disclosure, the second identification information includes a triggered TXOP sharing mode subfield, which is set to a second parameter value, indicating that the AP allocates the slot of the first TXOP to the first TDLS device.

In the embodiment of the present disclosure, the MU-RTS TXS Trigger frame includes a general information field, which includes a triggered TXOP sharing mode subfield. The second identification information may be carried in the triggered TXOP sharing mode subfield.

For the triggered TXOP sharing mode subfield, when its corresponding parameter value is set to different numerical values, the information it indicates is different, and the specific parameter value can be set according to actual conditions.

For details on setting the parameter value of the Triggered TXOP Sharing Mode subfield, reference can be made to Table 2 above. As shown in Table 2, when the Triggered TXOP Sharing Mode subfield is set to 3 (i.e., the second parameter value), the AP is instructed to allocate the slot of the first TXOP to the first TDLS device. Upon receiving the MU-RTS TXS Trigger frame, the first TDLS device can exchange low-latency service data with the second TDLS device via the TDLS link within the slot of the first TXOP.

In the communication method provided in the embodiment of the present disclosure, when the second TDLS device supports the target capability or the second TDLS device supports the first capability, a slot of the second TXOP is allocated to the second TDLS device.

The first capability includes sending low-latency service data to the first TDLS device through the second TDLS device in a slot of a second TXOP shared by the access point (AP) device.

The slot of the second TXOP is used by the second TDLS device to send low-latency service data to the first TDLS device.

After the first TDLS device successfully establishes a TDLS link with the second TDLS device, if the first TDLS device does not support the target capability (i.e., the parameter value of the corresponding Triggered TXOP Sharing Mode 3 Support subfield is set to 0), it is possible to further determine, through a TDLS establishment request frame or a TDLS establishment response frame corresponding to the second TDLS device, whether the second TDLS device supports the target capability, whether the second TDLS device supports the first capability, and whether the second TDLS device receives the second TXOP slot allocated by the AP, thereby determining whether the first TDLS device can receive data sent to it by the second TDLS device through the TDLS link.

The second TDLS device supports the target capability (i.e., the corresponding Triggered TXOP Sharing Mode 3 Support subfield parameter value is set to 1), which means that the second TDLS device can exchange data with the first TDLS device during the slots of the second TXOP assigned by the AP. The second TDLS device supports the first capability (i.e., the corresponding Triggered TXOP Sharing Mode 2 Support subfield parameter value is set to 1), which means that the second TDLS device can send data to the first TDLS device during the slots of the second TXOP assigned by the AP.

If further determining that the second TDLS device supports the target capability (i.e., the parameter value of the corresponding Triggered TXOP Sharing Mode 3 Support subfield is set to 1) or the second TDLS device supports the first capability (i.e., the parameter value of the corresponding Triggered TXOP Sharing Mode 2 Support subfield is set to 1), the slot of the second TXOP can be allocated to the second TDLS device through the AP.

The slot of the second TXOP can also be allocated through a MU-RTS TXS Trigger frame. For example, in the MU-RTS TXS Trigger frame sent by the AP to the second TDLS device, if the Triggered TXOP Sharing Mode subfield is set to 3, it instructs that the AP allocates the slot of the second TXOP to the second TDLS device.

If the AP determines that the second TDLS device supports the target capability (i.e., the parameter value of the corresponding Triggered TXOP Sharing Mode 3 Support subfield is set to 1) or the second TDLS device supports the first capability (i.e., the parameter value of the corresponding Triggered TXOP Sharing Mode 2 Support subfield is set to 1), and a second TXOP slot is allocated to the second TDLS device, then the second TDLS device can exchange data with the first TDLS device within the slot of the second TXOP allocated by the AP, or the second TDLS device can send data to the first TDLS device within the slot of the second TXOP allocated by the AP. Correspondingly, the first TDLS device can receive data (e.g., low-latency service data) sent to it by the second TDLS device through the TDLS link.

In the embodiment of the present disclosure, the AP can determine whether the TDLS device supports the target capability through the first identification information of the TDLS device, that is, the TDLS device can exchange low-latency service data within the slot of the first TXOP shared by the AP; for the first TDLS device that supports the target capability and obtains the slot of the first TXOP shared by the AP, it can exchange low-latency service data with the second TDLS device through the TDLS link within the slot of the first TXOP, thereby reducing the transmission delay during the low-latency service data transmission process, improving the low-latency service transmission efficiency, and avoiding the problem of increased transmission delay and low transmission efficiency during the data transmission process due to only one-way data transmission between the first TDLS device and the second TDLS device.

An embodiment of the present disclosure provides a communication method, which is applied to an AP device and may include the following steps:
determining whether a TDLS device supports a target capability through first identification information of the TDLS device; the target capability includes exchanging low-latency service data in a slot of a first TXOP shared by an access point (AP) device;
wherein the first TDLS device includes a first TDLS device and/or a second TDLS device.

Optionally, the first identification information is carried in EHT capabilities information of an EHT capabilities element of a first wireless frame; a Triggered TXOP Sharing Mode 3 support subfield of the EHT capabilities information being set to a first parameter child, indicates that the TDLS device supports the target capability.

Optionally, when the first identification information indicates that the first TDLS device supports the target capability, a second wireless frame is determined, the second wireless frame includes second identification information, and the second identification information identifies that the AP allocates a slot of the first TXOP to the first TDLS device; wherein the slot of the first TXOP is used for the first TDLS device to exchange data with the second TDLS device through a TDLS link; the first TDLS device and the second TDLS device are both members of a first R-TWT schedule.

Within an SP of the R-TWT schedule, the second wireless frame is sent to the first TDLS device.

Optionally, the second identification information includes a triggered TXOP sharing mode subfield, and the triggered TXOP sharing mode subfield being set to a second parameter value, indicates that the AP allocates the slot of the first TXOP to the first TDLS device.

Optionally, when the second TDLS device supports the target capability or the second TDLS device supports the first capability, the slot of the second TXOP is allocated to the second TDLS device; wherein the first capability includes sending low-latency service data to the first TDLS device through the second TDLS device within the slot of the second TXOP shared by the access point (AP) device; the slot of the second TXOP is used for the second TDLS device to send low-latency service data to the first TDLS device.

Optionally, the first wireless frame includes a TDLS setup request frame or a TDLS setup response frame.

Optionally, the second wireless frame includes a MU-RTS TXS Trigger frame.

In the embodiment of the present disclosure, the AP can determine whether the TDLS device supports the target capability through the first identification information of the TDLS device, that is, the TDLS device can exchange low-latency service data within the slot of the first TXOP shared by the AP; for the first TDLS device that supports the target capability and obtains the slot of the first TXOP shared by the AP, it can exchange low-latency service data with the second TDLS device through the TDLS link within the slot of the first TXOP, thereby reducing the transmission delay during the low-latency service data transmission process, improving the low-latency service transmission efficiency, and avoiding the problem of increased transmission delay and low transmission efficiency during the data transmission process due to only one-way data transmission between the first TDLS device and the second TDLS device.

Referring to FIG. 5, based on the same principle as the method provided in the embodiment of the present disclosure, the embodiment of the present disclosure further provides an electronic device, which is a first TDLS device, and includes:
a determining module, configured to determine a first wireless frame, the first wireless frame including first identification information, the first identification information indicating whether the first TDLS device supports a target capability; the target capability including exchanging low-latency service data with a second TDLS device within a slot of a first TXOP shared by an access point device AP; and
a sending module, configured to send the first wireless frame.

The present disclosure also provides a communication device, applied to a first TDLS device, including:
a wireless frame determining module, configured to determine a first wireless frame, the first wireless frame including first identification information, the first identification information indicating whether the first TDLS device supports a target capability; the target capability including exchanging low-latency service data with a second TDLS device within a slot of a first TXOP shared by an access point device AP; and
a wireless frame sending module, configured to send the first wireless frame.

The device also includes other modules of the electronic device in the aforementioned embodiment, which will not be described in detail here.

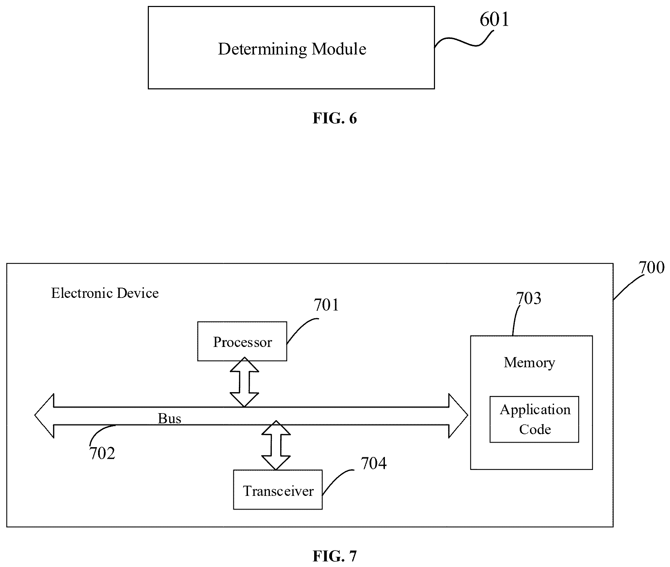

Referring to FIG. 6, based on the same principle as the method provided in the embodiment of the present disclosure, the embodiment of the present disclosure further provides an electronic device, which is an access point (AP) device, and includes:
a determining module, configured to determine whether a TDLS device supports a target capability through first identification information of the TDLS device; the target capability includes data exchange of low-latency service data in a slot of a first TXOP shared by the access point (AP) device; the TDLS device includes a first TDLS device and/or a second TDLS device.

The present disclosure also provides a communication device, which is applied to an access point device (AP). The device includes:
a wireless frame determining module, configured to determine whether a TDLS device supports a target capability through first identification information of the TDLS device; the target capability includes data exchange of low-latency service data in a slot of a first TXOP shared by the access point (AP) device; the TDLS device includes a first TDLS device and/or a second TDLS device.

The device also includes other modules of the electronic device in the aforementioned embodiment, which will not be described in detail here.

In an optional embodiment, the embodiment of the present disclosure further provides an electronic device, as shown in FIG. 7, the electronic device 700 shown in FIG. 7 may be a server, including: a processor 701 and a memory 703. The processor 701 and the memory 703 are connected, e.g., through a bus 702. Optionally, the electronic device 700 may further include a transceiver 704. It should be noted that in actual applications, the transceiver 704 is not limited to one, and the structure of the electronic device 700 does not constitute a limitation on the embodiment of the present disclosure.

The processor 701 may be a CPU (Central Processing Unit), a general-purpose processor, a DSP (Digital Signal Processor), an ASIC (Application Specific Integrated Circuit), an FPGA (Field Programmable Gate Array) or other programmable logic devices, transistor logic devices, hardware components or any combination thereof. It may implement or execute various exemplary logic blocks, modules and circuits described in conjunction with the disclosure of the present invention. The processor 701 may also be a combination that implements computing functions, such as a combination of one or more microprocessors, a combination of a DSP and a microprocessor, or the like.

The bus 702 may include a path for transmitting information between the above components. The bus 702 may be a PCI (Peripheral Component Interconnect) bus or an EISA(Extended Industry Standard Architecture) bus, or the like. The bus 702 may be divided into an address bus, a data bus, a control bus, and the like. For ease of representation, FIG. 7 only uses one thick line, but does not mean that there is only one bus or one type of bus.

The memory 703 may be a ROM (Read Only Memory) or other types of static storage devices that can store static information and instructions, a RAM (Random Access Memory) or other types of dynamic storage devices that can store information and instructions, or an EEPROM (Electrically Erasable Programmable Read Only Memory), a CD-ROM (Compact Disc Read Only Memory) or other optical disk storage, optical disk storage (including compressed optical disk, laser disk, optical disk, digital versatile disk, Blu-ray disk, or the like), a magnetic disk storage medium or other magnetic storage device, or any other medium that can be used to carry or store the desired program code in the form of instructions or data structures and can be accessed by a computer, but is not limited thereto.

The memory 703 is used to store application code for executing the solution of the present disclosure, and the execution is controlled by the processor 701. The processor 701 is used to execute the application code stored in the memory 703 to implement the content shown in the above method embodiment.

The electronic devices include, but are not limited to, mobile phones, laptop computers, digital broadcast receivers, PDAs (personal digital assistants), PADs (tablet computers), PMPs (portable multimedia players), vehicle-mounted terminals (such as vehicle-mounted navigation terminals), or the like, and fixed terminals such as digital TVs, desktop computers, etc. The electronic device shown in FIG. 7 is only an example and should not impose any limitation on the functions and scope of application of the embodiments of the present disclosure.

The embodiment of the present disclosure may be an independent physical server, or a server cluster or distributed system including multiple physical servers, or a cloud server that provides basic cloud computing services such as cloud services, cloud databases, cloud computing, cloud functions, cloud storage, network services, cloud communications, middleware services, domain name services, security services, CDN, and big data and artificial intelligence platforms. The terminal may be a smart phone, tablet computer, laptop computer, desktop computer, smart speaker, smart watch, or the like, but is not limited thereto. The terminal and the server may be directly or indirectly connected via wired or wireless communication, which is not limited by the present disclosure.

An embodiment of the present disclosure provides a computer-readable storage medium, on which a computer program is stored. When the computer-readable storage medium is run on a computer, the computer can execute the corresponding contents of the aforementioned method embodiment.

It should be understood that, although the steps in the flowchart of the accompanying drawings are displayed in sequence as indicated by the arrows, these steps are not necessarily executed in sequence in the order indicated by the arrows. Unless otherwise specified herein, there is no strict order restriction on the execution of these steps, and they can be executed in other orders. Moreover, at least a part of the steps in the flowchart of the accompanying drawings may include multiple sub-steps or multiple stages, and these sub-steps or stages are not necessarily executed at the same time, but can be executed at different times, and their execution order is not necessarily sequential, but can be executed in turn or alternately with other steps or at least a part of the sub-steps or stages of other steps.

It should be noted that the computer-readable medium mentioned above in the present disclosure may be a computer-readable signal medium or a computer-readable storage medium or any combination of the above two. The computer-readable storage medium may be, for example, but not limited to, an electrical, magnetic, optical, electromagnetic, infrared, or semiconductor system, apparatus or device, or any combination of the above. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, a computer-readable storage medium may be any tangible medium containing or storing a program that can be used by or in combination with an instruction execution system, apparatus or device. In the present disclosure, a computer-readable signal medium may include a data signal propagated in a baseband or as part of a carrier wave, which carries a computer-readable program code. This propagated data signal may take a variety of forms, including but not limited to electromagnetic signals, optical signals, or any suitable combination of the above. The computer readable signal media may also be any computer readable medium other than computer readable storage media, which may send, propagate or transmit a program for use by or in conjunction with an instruction execution system, apparatus or device. The program code contained on the computer readable medium may be transmitted using any appropriate medium, including but not limited to: wires, optical cables, RF (radio frequency), etc., or any suitable combination of the above.

The computer-readable medium may be included in the electronic device, or may exist independently without being installed in the electronic device.

The computer-readable medium carries one or more programs. When the one or more programs are executed by the electronic device, the electronic device executes the method shown in the above embodiment.

According to one aspect of the present disclosure, a computer program product or a computer program is provided, the computer program product or the computer program comprising computer instructions, the computer instructions being stored in a computer-readable storage medium. A processor of a computer device reads the computer instructions from the computer-readable storage medium, and the processor executes the computer instructions, so that the computer device executes the methods provided in the above-mentioned various optional implementations.

The computer program code for carrying out operations of the embodiment of the present disclosure may be written in one or more programming languages or a combination thereof, including object-oriented programming languages such as Java, Smalltalk, C++, and conventional procedural programming languages such as "C" or similar programming languages. The program code may be executed entirely on the user's computer, partially on the user's computer, as a separate software package, partially on the user's computer and partially on a remote computer, or entirely on a remote computer or server. In cases involving a remote computer, the remote computer may be connected to the user's computer through any type of network, including a local area network (LAN) or a wide area network (WAN), or may be connected to an external computer (e.g., via the Internet using an Internet service provider).

The flow chart and block diagram in the accompanying drawings illustrate the possible architecture, function and operation of the system, method and computer program product according to various embodiments of the present disclosure. In this regard, each block in the flow chart or block diagram can represent a module, a program segment or a part of a code, and the module, the program segment or a part of the code contains one or more executable instructions for realizing the specified logical function. It should also be noted that in some implementations as alternatives, the functions marked in the block can also occur in a sequence different from that marked in the accompanying drawings. For example, two blocks represented in succession can actually be executed substantially in parallel, and they can sometimes be executed in the opposite order, depending on the functions involved. It should also be noted that each block in the block diagram and/or flow chart, and the combination of the blocks in the block diagram and/or flow chart can be implemented with a dedicated hardware-based system that performs a specified function or operation, or can be implemented with a combination of dedicated hardware and computer instructions.

The modules involved in the embodiments described in the present disclosure may be implemented by software or hardware. The name of a module does not limit the module itself in some cases. For example, module A may also be described as "module A for performing operation B".

The above description is only a preferred embodiment of the present disclosure and an explanation of the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept. For example, a technical solution formed by replacing the above features with technical features with similar functions disclosed in this disclosure (but not limited thereto).

## Claims

1. A communication method, applied to a first tunneled direct link setup (TDLS) device, the method comprising:
determining a first wireless frame, wherein the first wireless frame comprises first identification information, wherein the first identification information indicates whether the first TDLS device supports a target capability; the target capability comprises exchanging low-latency service data with a second TDLS device in a slot of a first transmission opportunity (TXOP) shared by an access point (AP) device; and
sending the first wireless frame.

2. The communication method according to claim 1, wherein the first identification information is carried in extremely high throughput (EHT) capability information of an EHT capabilities element of the first wireless frame; and
wherein a triggered TXOP sharing mode 3 support subfield of the EHT capabilities information being set to a first parameter value indicates that the first TDLS device supports the target capability.

3. The communication method according to claim 1 or 2, further comprising:
in a case where the first identification information indicates that the first TDLS device supports the target capability,
receiving a second wireless frame, wherein the second wireless frame comprises second identification information, wherein the second identification information identifies that the AP allocates the slot of the first TXOP to the first TDLS device within a service period (SP) of a restricted target wake-up time (R-TWT) schedule;
wherein the slot of the first TXOP is used for the first TDLS device to exchange data with the second TDLS device through a TDLS link; the first TDLS device and the second TDLS device are both members of a first R-TWT schedule.

4. The communication method according to claim 3, wherein the second identification information comprises a triggered TXOP sharing mode subfield,
wherein the triggered TXOP sharing mode subfield being set to a second parameter value indicates that the AP allocates the slot of the first TXOP to the first TDLS device within the service time (SP) of the R-TWT schedule.

5. The communication method according to claim 3, further comprising:
exchanging data with the second TDLS device through the TDLS link in the slot of the first TXOP.

6. The communication method according to claim 1, further comprising:
in a case where the first identification information indicates that the first TDLS device does not support the target capability, receiving low-latency service data sent by the second TDLS device through the TDLS link in a slot of a second TXOP;
wherein the slot of the second TXOP is used by the second TDLS device to send low-latency service data to the first TDLS device.

7. The communication method according to claim 3, wherein the second wireless frame comprises a multi-user request-to-send trigger-based transmission status trigger (MU-RTS TXS Trigger) frame.

8. A communication method, applied to an access point (AP) device, the method comprising:
determining whether a tunneled direct link setup (TDLS) device supports a target capability through first identification information of the TDLS device; the target capability comprises exchanging low-latency service data in a slot of a first transmission opportunity (TXOP) shared by the AP device;
wherein the TDLS device comprises a first TDLS device and/or a second TDLS device.

9. The communication method according to claim 8, wherein the first identification information is carried in extremely high throughput (EHT) capability information of an EHT capabilities element of a first wireless frame; and
wherein a triggered TXOP sharing mode 3 support subfield of the EHT capabilities information being set to a first parameter value indicates that the TDLS device supports the target capability.

10. The communication method according to claim 8 or 9, further comprising:
in a case where the first identification information indicates that the first TDLS device supports the target capability,
determining a second wireless frame, wherein the second wireless frame comprises second identification information, wherein the second identification information identifies that the AP allocates the slot of the first TXOP to the first TDLS device;
wherein the slot of the first TXOP is used for the first TDLS device to exchange data with the second TDLS device through a TDLS link; the first TDLS device and the second TDLS device are both members of a first restricted target wake-up time (R-TWT) schedule; and
sending the second wireless frame to the first TDLS device within a service period (SP) of the R-TWT schedule.

11. The communication method according to claim 10, wherein the second identification information comprises a triggered TXOP sharing mode subfield,
wherein the triggered TXOP sharing mode subfield being set to a second parameter value indicates that the AP allocates the slot of the first TXOP to the first TDLS device.

12. The communication method according to claim 8, further comprising:
in a case where the second TDLS device supports the target capability or the second TDLS device supports a first capability, allocating a slot of a second TXOP to the second TDLS device;
wherein the first capability comprising sending low-latency service data to the first TDLS device through the second TDLS device in the slot of the second TXOP shared by the access point (AP) device; and
the slot of the second TXOP is used by the second TDLS device to send low-latency service data to the first TDLS device.

13. The communication method according to claim 10, wherein the second wireless frame comprises a multi-user request-to-send trigger-based transmission status trigger (MU-RTS TXS Trigger) frame.

14. An electronic device, wherein the electronic device is a first tunneled direct link setup (TDLS) device, and the electronic device comprises:
a receiving module, configured to determine a first wireless frame, wherein the first wireless frame comprises first identification information, wherein the first identification information indicates whether the first TDLS device supports a target capability; the target capability comprises exchanging low-latency service data with a second TDLS device in a slot of a first transmission opportunity (TXOP) shared by an access point (AP) device; and
a sending module, configured to send the first wireless frame.

15. An electronic device, wherein the electronic device is an access point (AP) device, and the electronic device comprises:
a determining module, configured to determine whether a tunneled direct link setup (TDLS) device supports a target capability through first identification information of the TDLS device; the target capability comprises exchanging low-latency service data in a slot of a first transmission opportunity (TXOP) shared by the AP device;
wherein the TDLS device comprises a first TDLS device and/or a second TDLS device.

16. An electronic device, comprising a memory, a processor, and a computer program stored in the memory and executable on the processor, wherein when the processor executes the program, the method according to any one of claims 1 to 7 or the method according to any one of claims 8 to 13 is implemented.

17. A computer-readable storage medium, wherein a computer program is stored on the computer-readable storage medium, and when the computer program is executed by a processor, the method according to any one of claims 1 to 7 or the method according to any one of claims 8 to 13 is implemented.
